# EUROPÄISCHE PATENTSCHRIFT

(11) **EP 3 216 375 B1**
(45) Veröffentlichungstag und Bekanntmachung des Hinweises auf die Patenterteilung: **09.01.2019**
(21) Anmeldenummer: 17158917.9
(22) Anmeldetag: 02.03.2017
(51) Int. Cl.: A47J 42/08

(54) **KAFFEEMÜHLE SOWIE KAFFEEVOLLAUTOMAT MIT KAFFEEMÜHLE**
COFFEE GRINDER AND COFFEE MACHINE HAVING COFFEE GRINDER
MOULIN À CAFÉ ET AUTOMATE À CAFÉ ÉQUIPÉ D'UN MOULIN À CAFÉ

(30) Priorität: 03.03.2016 DE 102016103806
(43) Veröffentlichungstag der Anmeldung: 13.09.2017
(73) Patentinhaber: Eugster/Frismag AG, 8580 Amriswil (CH)
(72) Erfinder: EICHER, Heinz, 8645 Jona (CH)
(74) Vertreter: Patentanwälte Behrmann Wagner PartG mbB

(56) Entgegenhaltungen:
- EP-A1- 2 050 375
- EP-A1- 2 050 377
- EP-A1- 2 764 808
- CN-U- 203 016 752
- DE-A1-102010 017 721

## Beschreibung

Die Erfindung betrifft eine Kaffeemühle, insbesondere zum Einbau in Kaffeevollautomaten, gemäß dem Oberbegriff des Anspruchs 1 mit einem in einem ein monolithisches (einteiliges), bevorzugt als Kunststoffspritzgussteil ausgebildetes, Gehäuseteil aufweisenden Mahlwerksgehäuse angeordneten Mahlwerk zum Mahlen von Kaffeebohnen zu Kaffeemehl, umfassend einen gemeinsam mit einer, bevorzugt als Auswerferscheibe ausgebildeten, Trägerscheibe um eine Rotationsachse relativ zu einem, von einem, vorzugsweise als Abdeckring ausgebildeten, Führungsring bei einer axialen Einstellbewegung zur Einstellung des Mahlgrades geführten, ersten Mahlelement, insbesondere einem Mahlring, rotierbaren zweiten Mahlelement, insbesondere einem Mahlkegel. Die Trägerscheibe trägt dabei das zweite Mahlelement und ist mit diesem für die gemeinsame Rotationsbewegung zumindest zeitweise drehfest verbunden. Zum radialen Austragen von Kaffeemehl ist die Trägerscheibe bevorzugt als Auswerferscheibe (Mitnehmerscheibe) ausgebildet, die weiter bevorzugt mehrere in Umfangsrichtung beabstandete Mitnehmerflügel aufweist. Das, bevorzugt drehfest angeordnete, erste Mahlelement ist zum Einstellen eines Kaffeemahlgrades axial relativ zu dem rotierbaren zweiten Mahlelement mittels eines manuell und/oder motorisch rotierbaren Verstellrings verstellbar. Das zweite Mahlelement stützt sich an einem Aufnahmeteil ab, welches das erste Mahlelement umschließt.

Ferner betrifft die Erfindung einen Kaffeevollautomat gemäß Anspruch 12, umfassend eine solche Kaffeemühle sowie eine Brüheinheit zum Auslaugen des mit der Kaffeemühle hergestellten Kaffeemehls, welches bevorzugt automatisch von der Kaffeemühle, insbesondere über deren Träger- bzw. Auswerferscheibe zur Brüheinheit gelangt.

In der EP 2 764 808 A1 ist eine Kaffeemühle für Kaffeevollautomaten beschrieben. Die Mahlelemente des bekannten Mahlwerks, konkret ein Mahlring und ein Mahlkegel weisen durch die Verkettung einer Vielzahl von Toleranzen sowohl axial als auch radial ein großen Spiel auf und lassen dadurch nur eine weniger gute Reproduzierbarkeit der Mahlmenge und der Mahlgradverteilung (Mahlfeinheitsverteilung) zu.

Aus der CN 203016752 U ist eine Kaffeemühle mit einem monolithischen Gehäuseteil bekannt, innerhalb dessen rotierbar ein Mahlkegel angeordnet, der Drehfest mit einer Trägerscheibe gekoppelt ist. Dem Mahlkegel ist ein radial benachbart zu diesem angeordneter Mahlring zugeordnet, welcher unmittelbar in einem Verstellring angeordnet ist. An dem Verstellring ist ein Führungsring fixiert. Beim Mahlvorgang wird auf dem Mahlring ein Drehmoment ausgeübt, welches bestrebt ist, eine Höhenverstellung des Mahlrings zu verursachen. Somit kann sich der Mahlgrad während des Mahlvorgangs verändern. Außerdem verändert sich das Todraumvolumen zwischen Führungsring und Trägerscheibe beim Einstellen des Mahlgrades, so dass die Gefahr größerer Kaffeemehlrückstände gegeben ist. Ein weiteres Stand der Technik Dokument ist die EP 2 050 377.

Ausgehend von dem vorgenannten Stand der Technik liegt der Erfindung die Aufgabe zugrunde, eine in einen Kaffeevollautomaten integrierbare Kaffeemühle anzugeben, die eine gute Reproduzierbarkeit der Mahlmenge und der Mahlgradverteilung zulässt. Ferner besteht die Aufgabe darin, einen Kaffeevollautomat mit einer solchen, verbesserten integrierten Kaffeemühle anzugeben.

Diese Aufgabe wird hinsichtlich der Kaffeemühle mit den Merkmalen des Anspruchs 1 gelöst, d.h. bei einer gattungsgemäßen Kaffeemühle dadurch, dass sich die Trägerscheibe, insbesondere über ein Wälzlager, und, bevorzugt unmittelbar oder über eine Elastomerdichtung, der Führungsring jeweils in axialer Richtung bezogen auf die Rotationsachse an dem (denselben) monolithischen Gehäuseteil abstützen. Der Führungsring dient dabei zur Führung des ersten Mahlelementes bei seiner axialen Einstellbewegung relativ zum zweiten Mahlelement zur Einstellung des Mahlgrades. Bevorzugt ist es, wenn sich die Trägerscheibe mittelbar, nämlich über das vorerwähnte Wälzlager in axialer Richtung an einem radial nach innen ragenden, insbesondere unteren Abschnitt des monolithischen Gehäuseteils abstützt, wobei das Wälzlager wiederum bevorzugt unmittelbar auf dem Gehäuseteil aufliegt. Der das erste Mahlelement an seinem Umfang führende Führungsring stützt sich bevorzugt unmittelbar in axialer Richtung an demselben monolithischen Gehäuseteil ab oder, ggf. zusätzlich über eine Elastomerdichtung. Weiter erfindungsgemäß ist vorgesehen, dass das Aufnahmeteil zumindest abschnittsweise innerhalb des monolithischen Gehäuseteils angeordnet ist und dass das Aufnahmeteil mittels einer axial zwischen dem Aufnahmeteil und dem Führungsring angeordneten Positionierfeder axial in Richtung des Verstellrings, bevorzugt gegen den Verstellring, federkraftbeaufschlagt ist.

Hinsichtlich des Kaffeevollautomaten wird die Aufgabe mit den Merkmalen des Anspruchs 12 gelöst.

Vorteilhafte Weiterbildungen der Erfindung sind in den Unteransprüchen angeben. In den Rahmen der Erfindung fallen sämtliche Kombinationen aus zumindest zwei von in der Beschreibung, den Ansprüchen und/oder den Figuren offenbarten Merkmalen.

Dreh- und Angelpunkt der erfindungsgemäßen Kaffeemühle ist ein, bevorzugt als Kunststoffspritzgussteil ausgebildetes Gehäuseteil zur relativen Ausrichtung/Positionierung der Trägerscheibe und damit des von dieser getragenen zweiten Mahlelementes relativ zu dem Führungsring und damit dem von diesem geführten Mahlelement. Anders ausgedrückt liegt der Erfindung der Gedanke zugrunde zur Verbesserung der Einstellgenauigkeit bzw. zur Verbesserung der Reproduzierbarkeit der Mahlmenge und der Mahlgradverteilung Toleranzketten des Mahlwerks der Kaffeemühle dadurch zu verkürzen, dass sich Trägerscheibe und Führungsring jeweils unmittelbar oder mittelbar an demselben einteiligen bzw. monolithischen Gehäuseteil in axialer Richtung abstützen und ggf., wie später noch erläutert werden wird und in Weiterbildung der Erfindung vorgesehen ist, auch in radialer Richtung. Besonders bevorzugt ist es dabei, wenn die Trägerscheibe axial über ein Wälzlager, insbesondere ein Kugellager auf dem gemeinsamen Gehäuseteil aufliegt und/oder sich der Führungsring axial unmittelbar oder (zusätzlich oder alternativ) über eine Elastomerdichtung in axialer Richtung an demselben monolithischen Gehäuseteil abstützt. Dabei ist weiter bevorzugt, wenn der, bevorzugt ortsfeste, d.h. nicht axial zusammen mit dem Aufnahmeteil verstellbare und weiter bevorzugt drehfest, d.h. nicht rotierbar angeordnete, Führungsring gleichzeitig einen Abdeckring bildet, der einen Bereich radial außerhalb des bevorzugt als Mahlring ausgebildeten ersten Mahlelementes nach oben verschließt - anders bevorzugt verschließt der dann als Abdeckring ausgebildete Führungsring bevorzugt einen die vorzugsweise als Auswerferscheibe ausgebildete Trägerscheibe aufnehmenden Raum (also ein Volumen) in axialer Richtung nach oben. Die Trägerscheibe, die bevorzugt drehfest mit dem zweiten Mahlteil gekoppelt bzw. verbunden ist, ist bevorzugt als Auswerferscheibe (Mitnehmerscheibe) ausgebildet, die für einen Austrag von Kaffeemehl in radialer Sorge trägt und noch weiter bevorzugt entsprechende Auswerfer- bzw. Mitnehmerflügel aufweist, die über den Umfang der Auswerferscheibe verteilt angeordnet ist. Bevorzugt umfasst die Kaffeemühle neben dem zuvor beschriebenen Mahlwerk einen elektrischen Antriebsmotor sowie ein, weiter bevorzugt als Planetengetriebe ausgebildetes Untersetzungsgetriebe zum rotierenden Antreiben des zweiten Mahlelementes, d.h. bevorzugt einem Mahlkegel relativ zum ersten Mahlelement, bevorzugt einem den Mahlkegel radial außen umschließenden Mahlring.

Erfindungsgemäß ist vorgesehen, dass sich das erste Mahlelement in axialer Richtung, insbesondere nach unten, an einem Aufnahmeteil abstützt, welches ebenfalls zumindest abschnittsweise innerhalb des monolithischen Gehäuseteils angeordnet ist. Das Aufnahmeteil stützt sich wiederum, bevorzugt in eine von dem Führungsring abgewandte Axialrichtung, d.h. insbesondere in Einbaulage (bezogen auf eine untere Aufstellfläche der Kaffeemühle oder des Kaffeevollautomaten) nach oben axial an einem Verstellring ab, wobei der von dem Verstellring gebildete Axialanschlag durch Verdrehen des Verstellrings axial veränderbar ist, wodurch die Position des Aufnahmeteils und damit des von diesem getragenen ersten Mahlelementes relativ zum zweiten Mahlelement variierbar ist. Bevorzugt trägt das Aufnahmeteil einen aus dem Mahlwerksgehäuse axial herausragenden Einfülltrichter für Kaffeebohnen. Der Verstellring kann je nach Ausgestaltung der Kaffeemühle manuell und/oder motorisch rotiert werden, insbesondere um die gedacht verlängerte Rotationsachse des Mahlwerks, zu welcher der Verstellring bevorzugt konzentrisch angeordnet ist. Zur weiteren Verkürzung der Toleranzkette ist es bevorzugt, wenn der Verstellring, bevorzugt unmittelbar, insbesondere mittels einer zwischen dem Verstellring und dem monolithischen Gehäuseteil realisierten (eine gewichtende Steigerung aufweisenden) Gewindeverbindung an dem monolithischen Gehäuseteil axial verstellbar festgelegt ist.

Um durch Rotation des Verstellrings eine axiale Verstellbewegung des Aufnahmeteils und damit des ersten Mahlelementes relativ zu dem axial ortsfesten zweiten Mahlelement zu bewirken, ist erfindungsgemäß mit Vorteil vorgesehen, dass das Aufnahmeteil mittels einer Positionierfeder axial in Richtung des Verstellrings, bevorzugt unmittelbar gegen den Verstellring federkraftbeaufschlagt ist. Dies führt dazu, dass bei einer Verstellbewegung des Verstellrings axial in Richtung von der Trägerscheibe weg das Aufnahmeteil automatisch axial mit bewegt wird und an dem mittelbar oder unmittelbar von dem Verstellring gebildeten (oberen) Axialanschlag positioniert bleibt.

Erfindungsgemäß ist vorgesehen, dass sich die Positionierfeder axial zwischen dem Aufnahmeteil und dem Führungsring befindet, wobei es besonders zweckmäßig ist, wenn sich die Positionierfeder unmittelbar axial zum einen am Aufnahmeteil und/oder zum anderen am Führungsring abstützt. Durch das axiale Abstützen an dem sich bevorzugt unmittelbar axial am dem Gehäuseteil abstützenden Führungsring wird die Toleranzkette äußerst kurz gehalten.

Durch das Vorsehen eines gemeinsamen, monolithischen Gehäuseteils zur axialen und bevorzugt auch radialen Abstützung von Trägerscheibe und Führungsring werden deutlich reproduzierbare Mahlmengen sowie Mahlgradverteilungen (Partikelgrößenverteilungen) des Kaffeemehls erreicht. Darüber hinaus kommt die Kaffeemühle, insbesondere das Mahlwerk mit deutlich weniger Bauteilen aus und ist dadurch kostengünstiger herstellbar, leichter montierbar und auch einfacher instandsetzbar. Darüber hinaus bietet das Vorsehen des gemeinsamen monolithischen Gehäuseteils die Möglichkeit der Realisierung des Mahlwerks mit Mahlwerksgehäuse als Mahlwerksmodul, welche unabhängig von dem Getriebe und dem elektrischen Antrieb montierbar und am Ende der Montage, d.h. bei der Endmontage der Kaffeemühle lediglich mit dem Antriebsmotor und dem Untersetzungsgetriebe gekoppelt werden muss, insbesondere durch einfaches axiales Ineinanderstecken zum drehfesten Verbinden der Trägerscheibe des Mahlwerks mit einem Abtriebselement, insbesondere einer Hohlwelle des Untersetzungsgetriebes. Dies ist dadurch möglich, dass die Trägerscheibe in dem monolithischen Gehäuseteil gefangen ist bzw. sich auch über das Wälzlager an diesem abstützt und somit nicht herausfallen kann.

Durch die bevorzugt drehfeste Anordnung des Führungsrings bleibt das von dem Führungsring und der Trägerscheibe begrenzte Volumen (d.h. der Raum) auch bei einer Veränderung des Mahlgrades konstant, sodass mit Vorteil vermieden wird, dass durch die Einstellung des Mahlgrades ein zusätzliches Todvolumen entsteht, in welchem Kaffeemehlreste verbleiben bzw. anhaften können. Bevorzugt ist der Axialabstand zwischen einer der Trägerscheibe zugewandten Unterseite des Führungsrings und einer dem Führungsring zuwandten Oberseite der Trägerscheibe auf ein Minimum reduziert.

Wie bereits erwähnt ist es besonders zweckmäßig, wenn das monolithische Gehäuse nicht nur zur Reduzierung der axialen Toleranzen sondern auch zur Reduzierung radialer Toleranzketten dient - zum diesem Zweck ist in Weiterbildung der Erfindung vorgesehen, dass sich die Trägerscheibe, bevorzugt mittelbar, vorzugsweise über das Wälzlager, und/oder der Führungsring, dieser bevorzugt unmittelbar oder alternativ (und bevorzugt) über eine Elastomerdichtung in radialer Richtung an demselben (gemeinsamen) monolithischen Gehäuseteil abstützen/abstützt.

Bevorzugt weist das monolithische Gehäuseteil eine vergleichsweise große Axialerstreckung auf, die so bemessen ist, dass sich das monolithische Gehäuseteil sowohl in einem radial benachbarten Bereich zur Trägerscheibe als auch des ersten Mahlelements befindet. Anders ausgedrückt befinden sich das erste Mahlelement und die Trägerscheibe zumindest abschnittsweise radial innerhalb des monolithischen Gehäuseteils.

Bevorzugt handelt es sich bei der Positionierfeder um eine Ringfeder, beispielsweise um eine ringförmige, gewinkelte Blattfeder.

Wie erwähnt sind das zweite Mahlelement und die Trägerscheibe drehfest verbunden, insbesondere um das zweite Mahlelement durch Verdrehen der Trägerscheibe mittels des Untersetzungsgetriebes über den elektrischen Antrieb zu rotieren. Um eine Beschädigung des Mahlwerks sowie des Antriebs im Falle einer Blockade des Mahlwerks, beispielsweise durch einen Fremdkörper, wie einem Stein zu vermeiden, ist es bevorzugt, wenn zwischen Trägerscheibe und zweitem Mahlelement eine Überlastkupplung, insbesondere eine Rutschkupplung zum Aufheben der drehfesten Verbindung bei blockierendem Mahlwerk angeordnet ist. Bevorzugt umfasst die Überlastkupplung mindestens eine in Richtung des zweiten Mahlelementes federkraftbeaufschlagte Kupplungskugel, die das Drehmoment überträgt und die bei unzulässig hohem Drehelement entgegen der Federkraft axial verstellt wird, wodurch die drehfeste Verbindung aufgehoben wird. Alternativ kann auch auf eine Überlastkupplung verzichtet werden.

Wie erwähnt ist es besonders zweckmäßig, wenn das Mahlwerk mit Mahlwerksgehäuse als Mahlwerksmodul ausgebildet ist, welche bevorzugt durch axiales Ineinanderstecken mit dem Untersetzungsgetriebe gekoppelt ist.

Ferner betrifft die Erfindung einen Kaffeevollautomat mit einer, vorzugsweise in einem Kaffeevollautomatengehäuse angeordneten, wie zuvor beschrieben ausgebildeten Kaffeemühle, die derart relativ zu der Brüheinheit angeordnet und/oder kaffeemehlleitend verbunden ist, dass bei einem Mahlvorgang hergestelltes Kaffeemehl automatisch in die Brüheinheit gelangt, um dann zur Herstellung eines Kaffeegetränks ausgelaugt zu werden.

Weitere Vorteile, Merkmale und Einzelheiten der Erfindung ergeben sich aus der nachfolgenden Beschreibung eines bevorzugten Ausführungsbeispiels sowie anhand der Zeichnungen.

Diese zeigen in:
- Fig. 1:: in einer Außenansicht ein bevorzugtes Ausführungsbeispiel einer nach dem Konzept der Erfindung ausgebildeten Kaffeemühle, und
- Fig. 2:: einen oberen Teil der Kaffeemühle gemäß Fig. 1 in einer Schnittansicht entlang der Schnittlinie A - A gemäß Fig. 1.

In den Figuren sind gleiche Elemente und Elemente mit der gleichen Funktion mit den gleichen Bezugszeichen gekennzeichnet.

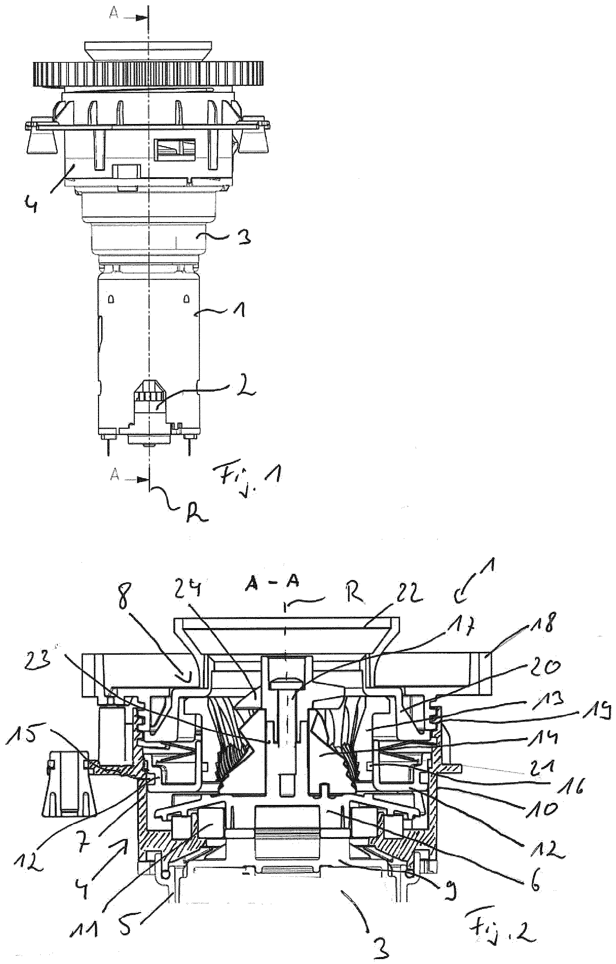

In den Fig. 1 und 2 ist eine Kaffeemühle 1 zur Integration in einem Kaffeevollautomat gezeigt. Die Kaffeemühle 1 umfasst einen elektrischen Antriebsmotor 2, der mit einem darüber angeordneten Untersetzungsgetriebe 3 gekoppelt ist. Die Einheit bestehend aus Antriebsmotor 2 und Untersetzungsgetriebe 3 ist gekoppelt mit einem Mahlwerksmodul 4, welches in einer Schnittansicht in Fig. 2 gezeigt ist. Zu erkennen ist, dass das Mahlwerksmodul 4 auf einem Getriebegehäuse 5 aufsitzt, wobei eine als Auswerferscheibe (Mitnehmerscheibe) ausgebildete Trägerscheibe 6 eines in einem Mahlwerksgehäuse 7 angeordneten Mahlwerks 8 des Mahlwerksmoduls 4 drehfest mit einem als Hohlwelle ausgebildeten Abtriebselement 9 des aus Übersichtlichkeitsgründen nicht dargestellten Untersetzungsgetriebes 3 gekoppelt ist.

Kernbestandteil des Mahlwerkmoduls 4 ist ein hier als Kunststoffspritzgussteil ausgebildetes monolithisches Gehäuseteil 10, an dem sich axial über ein als Kugellager ausgebildetes Wälzlager 11 die Trägerscheibe 6 abstützt. Ebenfalls axial stützt sich an dem monolithischen Gehäuseteil 10 mit Axialabstand zu der Trägerscheibe 6 ein axial ortsfester, d.h. nicht verstellbarer Führungsring 12 ab, welcher ein als Mahlring ausgebildetes erstes Mahlelement 13 des Mahlwerks 8 radial außen an seinem Außenumfang führt, und zwar bei einer axialen Verstellbewegung des ersten Mahlelementes 13 relativ zu einem als Mahlkegel ausgebildeten zweiten Mahlelement 14, um hierdurch den Mahlgrad einstellen zu können. Die axiale Abstützung des Führungsrings 12 am Gehäuseteil 10 ist in den Figuren nicht gezeigt. Die axiale Abstützung ist konstruktiv einfach realisierbar, indem der Führungsring 12, insbesondere in einer Ausklinkung des Gehäuseteils 10 aufliegt bzw. sich dort axial, bevorzugt unmittelbar, in der Zeichnungsebene nach unten abstützt. Bevorzugt ist diese Abstützung gleichzeitig als Drehmomentstütze ausgebildet, um ein Rotieren des Führungsrings sicher zu verhindern. Der Führungsring 12 stützt sich gleichzeitig in radialer Richtung, teilweise über eine als Ringdichtung ausgebildete Elastomerdichtung 15 am Innenumfang des Führungsrings 12 ab. Radial zwischen dem Außenumfang des ersten Mahlelementes 13 und dem Innenumfang des Führungsrings 12 befindet sich eine (weitere) elastomere Ringdichtung 16. Das die Trägerscheibe 6 axial tragende und bei ihrer Umdrehung um eine Rotationsachse lagernde Wälzlager 11 stützt sich ebenfalls radial außen am monolithischen Gehäuseteil 10 ab.

Aus Fig. 2 ist zu erkennen, dass das von dem ersten Mahlelement 13 umschlossene zweite Mahlelement 14, hier der Mahlkegel über eine zentrische Fixierschraube 17 an einem Axialfortsatz 23 (Fixierdom) der Trägerscheibe 6 festgelegt ist, wobei die Fixierschraube 17 zudem eine Einzugsschnecke 24 fixiert, die zusammen mit dem zweiten Mahlelement 14 und der Trägerscheibe 6 in Umfangsrichtung bei betätigtem elektrischen Antriebsmotor 2 rotiert. Das zweite Mahlelement 14 und die Trägerscheibe 6 sind drehfest gekoppelt, und zwar über eine nicht im Detail gezeigte Überlastkupplung, wie diese beispielhaft in der EP 2 764 808 A1 gezeigt ist.

Zum axialen Verstellen des ersten, nicht rotierbaren Mahlelementes 13 relativ zu dem elektromotorisch angetriebenen bzw. antreibbaren zweiten Mahlelement 14 ist ein in dem gezeigten Ausführungsbeispiel manuell rotierbarer Verstellring 18 vorgesehen, der über eine Gewindeverbindung 19 axial verstellbar und rotierbar am monolitischen Gehäuseteil 10 festgelegt ist. Axial in der Zeichnungsebene nach oben stützt sich an dem Verstellring 18 ein unterhalb des Verstellrings angeordnetes Aufnahmeteil 20 (Mahlringaufnahme) ab. Das nicht rotierbare Aufnahmeteil 20, an dem sich das erste Mahlelement 13 axial abstützt, ist über eine Positionierfeder 21 axial gegen die Unterseite des Verstellrings 18 federkraftbeaufschlagt. Auf der dem Verstellring 18 gegenüberliegenden Axialseite stützt sich die als Ringfeder ausgebildete Positionierfeder 21 unmittelbar axial an dem Führungsring 12 ab.

Wird der Verstellring 18 in eine Umfangsrichtung rotiert, drückt dieser entgegen der Federkraft der Positionierfeder 21 das Aufnahmeteil 20 und damit das erste Mahlelemente 13 entlang der Rotationsachse R in der Zeichnungsebene nach unten in Richtung des zweiten Mahlelementes 14. Wird der Verstellring 18 in die entgegengesetzte Umfangsrichtung rotiert und bewegt sich somit axial von dem zweiten Mahlelement 14 weg, wird das Aufnahmeteil 20 aufgrund der Federkraft der Positionierfeder 21 entlang der Rotationsachse R nach oben, d.h. von dem zweiten Mahlelement 14 weggedrückt.

Aus Fig. 2 ergibt sich, dass an dem Aufnahmeteil 20 ein den Verstellring 18 überragender Einfülltrichter 22 festgelegt ist. Ebenfalls ergibt sich aus Fig. 2, dass der Führungsring 12 als Abdeckring ausgebildet ist, der den darunter befindlichen Mahlwerksbereich abdeckt und aufgrund des Vorsehens der Dichtungen 15, 16 sogar staubdicht verschließt.

### Bezugszeichenliste

- 1: Kaffeemühle
- 2: elektrischer Antriebsmotor (elektromotorischer Antrieb)
- 3: Untersetzungsgetriebe
- 4: Mahlwerksmodul
- 5: Getriebegehäuse
- 6: Trägerscheibe
- 7: Mahlwerksgehäuse
- 8: Mahlwerk
- 9: Abtriebselement
- 10: monolithisches Gehäuseteil
- 11: Wälzlager
- 12: Führungsring
- 13: erstes Mahlelement (Mahlring)
- 14: zweites Mahlelement (Mahlkegel)
- 15: Elastomerdichtung
- 16: elastomere Ringdichtung
- 17: Fixierschraube
- 18: Verstellring
- 19: Gewindeverbindung
- 20: Aufnahmeteil
- 21: Positionierfeder
- 22: Einfülltrichter
- 23: Axialfortsatz
- 24: Einzugsschnecke

- R: Rotationsachse

## Patentansprüche

1. Kaffeemühle (1), insbesondere zum Einbau in Kaffeevollautomaten, mit einem in einem ein monolithisches, bevorzugt als Kunststoffspritzgussteil ausgebildetes, Gehäuseteil (10) aufweisenden Mahlwerksgehäuse (7) angeordneten Mahlwerk (8) zum Mahlen von Kaffeebohnen zu Kaffeemehl, umfassend einen gemeinsam mit einer, bevorzugt als Auswerferscheibe ausgebildeten, Trägerscheibe (6) um eine Rotationsachse (R) relativ zu einem von einem, vorzugsweise als Abdeckring ausgebildeten, Führungsring (12) bei einer axialen Einstellbewegung zur Einstellung des Mahlgrades geführten ersten Mahlelement (13), insbesondere einem Mahlring, rotierbaren zweiten Mahlelement (14), insbesondere einem Mahlkegel, wobei das erste Mahlelement (13) zum Einstellen eines Kaffeemehlgrades axial zu dem zweiten Mahlelement (14) mittels eines manuell und/oder motorisch rotierbaren Verstellrings (18) verstellbar ist, und wobei ein das zweite Mahlelement (14) umschließendes, sich axial an dem ersten Mahlelement (13) abstützendes Aufnahmeteil (20) für das erste Mehlelement (13) vorgesehen ist,
**dadurch gekennzeichnet,**
**dass** sich die Trägerscheibe (6), insbesondere über ein Wälzlager (11), und der Führungsring (12) jeweils in axialer Richtung bezogen auf die Rotationsachse (R) an dem monolithischen Gehäuseteil (10) abstützen, und dass das Aufnahmeteil (20) zumindest abschnittsweise innerhalb des monolithischen Gehäuseteils (10) angeordnet ist, und dass das Aufnahmeteil (20) mittels einer axial zwischen dem Aufnahmeteil (20) und dem Führungsring (12) angeordneten Positionsfeder (21) axial in Richtung des Verstellrings (18), bevorzugt gegen den Verstellring (18), federkraftbeaufschlagt ist.

2. Kaffeemühle nach Anspruch 1,
**dadurch gekennzeichnet,**
**dass** sich die Trägerscheibe (6), bevorzugt über das Wälzlager, (11) und/oder, bevorzugt unmittelbar oder über eine Elastomerdichtung (15), der Führungsring (12) in radialer Richtung an dem monolithischen Gehäuseteil (10) abstützen/abstützt.

3. Kaffeemühle nach einem der Ansprüche 1 oder 2,
**dadurch gekennzeichnet,**
**dass** das monolithische Gehäuseteil (10) sich in axialer Richtung bis in einen Bereich radial außerhalb der Trägerscheibe (6) und des ersten Mahlelementes (13) erstreckt.

4. Kaffeemühle nach einem der vorhergehenden Ansprüche,
**dadurch gekennzeichnet,**
**dass** das Aufnahmeteil (20) drehfest relativ zu dem Gehäuseteil (10) angeordnet ist, insbesondere über eine Drehmomentstütze zum Gehäuseteil (10).

5. Kaffeemühle nach einem der vorhergehenden Ansprüche,
**dadurch gekennzeichnet,**
**dass** der Führungsring (12) ortsfest relativ zu dem Gehäuseteil (10) positioniert ist.

6. Kaffeemühle nach einem der vorhergehenden Ansprüche,
**dadurch gekennzeichnet,**
**dass** der Verstellring (18), bevorzugt unmittelbar, insbesondere in einer Gewindeverbindung (19), an dem monolithischen Gehäuseteil (10) festgelegt ist.

7. Kaffeemühle nach einem der vorhergehenden Ansprüche,
**dadurch gekennzeichnet,**
**dass** das Aufnahmeteil (20) einen Einfülltrichter (22) trägt.

8. Kaffeemühle nach einem der vorhergehenden Ansprüche,
**dadurch gekennzeichnet,**
**dass** sich die Positionierfeder (21) unmittelbar am Aufnahmeteil (20) und/oder dem Führungsring (12) abstützt.

9. Kaffeemühle nach einem der vorhergehenden Ansprüche,
**dadurch gekennzeichnet,**
**dass** zwischen der Trägerscheibe (6) und dem zweiten Mahlelement (14) eine Überlastkupplung zum Aufheben einer drehfesten Verbindung bei blockierendem Mahlwerk (8) angeordnet ist.

10. Kaffeemühle nach einem der vorhergehenden Ansprüche,
**dadurch gekennzeichnet,**
**dass** das Mahlwerk (8) mit Mahlwerksgehäuse (7) als Mahlwerksmodul (4) ausgebildet ist, welches axial, bevorzugt durch Ineinanderstecken, drehfest mit einem einen elektrischen Antriebsmotor (2) und ein Untersetzungsgetriebe (3) aufweisenden Antriebseinheit drehfest gekoppelt ist.

11. Kaffeemühle nach einem der vorhergehenden Ansprüche,
**dadurch gekennzeichnet,**
**dass** die Positionierfeder (21) ringförmig ausgebildet ist.

12. Kaffeevollautomat, umfassend eine Kaffeemühle (1) nach einem der vorhergehenden Ansprüche sowie eine Brüheinheit zum Auslagen des mit der Kaffeemühle (1) hergestellten Kaffeemehls.

## Claims

1. A coffee grinder (1), in particular for being installed in fully automatic coffee machines, comprising a grinder (8) disposed in a grinder housing (7) comprising a monolithic housing component (10), preferably realized as a plastic injection molding component, said grinder (8) being used for grinding coffee beans into ground coffee, comprising a second grinding element (14), in particular a grinding cone, which can be rotated together with a support disk (6), which is preferably realized as an ejections disk, around a rotation axis (R) relative to a first grinding element (13), in particular a grinding ring, guided by a guide ring (12), which is preferably realized as a covering ring, during an axial adjustment movement for adjusting the grinding degree, the first grinding element (13) being axially displaceable to the second grinding element (14) by means of a displacement ring (18), which is manually and/or motorically rotatable, for adjusting a grinding degree of the ground coffee and a receiving component (20) enclosing the second grinding element (14) and axially supported by the first grinding element (13) being provided for the first grinding element (13)
**characterized in that**
the support disk (6), in particular via a rolling-element bearing (11), and the guide ring (12) each abut against the monolithic housing component (10) in the axial direction relative to the rotation axis (R), and that the receiving component (20) is disposed at least in sections within the monolithic housing component (10) and that the receiving component (20) is axially spring loaded in the direction of the displacement ring (18), preferably against the displacement ring (18), by means of a positioning spring (21) axially disposed between the receiving component (20) and the guide ring (12).

2. The coffee grinder according to claim 1,
**characterized in that**
the support disk (6) is supported in the radial direction by the monolithic housing component (10), preferably via the rolling-element bearing (11), and/or that the guide ring (12) is supported in the radial direction by the monolithic housing component (10), preferably directly or via an elastomer seal (15).

3. The coffee grinder according to one of the claims 1 or 2, **characterized in that**
the monolithic housing component (10) extends in the axial direction into an area disposed radially outside of the support disk (6) and of the first grinding element (13).

4. The coffee grinder according to one of the preceding claims, **characterized in that**
the receiving component (20) is disposed in a torque-proof manner relative to the housing component (10), in particular to the housing component (10) via a torque support.

5. The coffee grinder according to one of the preceding claims, **characterized in that**
the guide ring (12) is disposed in a stationary manner relative to the housing component (10).

6. The coffee grinder according to one of the preceding claims, **characterized in that**
the displacement ring (18) is fixed, preferably directly, on the monolithic housing component (10), in particular in a threaded connection (19).

7. The coffee grinder according to one of the preceding claims, **characterized in that**
the receiving component (20) supports a filling funnel (22).

8. The coffee grinder according to one of the preceding claims, **characterized in that**
the positioning spring (21) is supported directly at the receiving component (20) and/or the guide ring (12).

9. The coffee grinder according to one of the preceding claims, **characterized in that**
an overload clutch for undoing a torque-proof connection is disposed between the support disk (6) and the second grinding element (14) should the grinder (8) be blocked.

10. The coffee grinder according to one of the preceding claims, **characterized in that**
the grinder (8) and the grinder housing (7) are realized as a grinding module (4) axially coupled in a torque-proof manner, preferably by fitting one into the other, with a drive unit, which comprises an electric drive motor (2) and a reduction gear (3).

11. The coffee grinder according to one of the preceding claims, **characterized in that**
the positioning spring (21) is ring-shaped.

12. A fully automatic coffee machine comprising a coffee grinder (1) according to one of the preceding claims as well as a brewing unit for leaching the ground coffee produced by the coffee grinder (1).

## Revendications

1. Moulin à café (1), en particulier pour être intégré dans des machines à café entièrement automatiques, ayant un broyeur (8) disposé dans un boîtier de broyeur (7) comprenant une partie de boîtier monolithique (10), qui est réalisée de préférence comme partie de matière plastique moulée par injection, ledit broyeur (8) servant à moudre des grains de café afin d'obtenir du café moulu, comprenant un deuxième élément de moulage (14), en particulier un cône de moulage, qui peut être tourné en combinaison avec un disque de support (6), qui est de préférence réalisé comme bague d'éjection, autour d'un axe de rotation (R) en relation à un premier élément de moulage (13), en particulier une bague de moulage, guidé par une bague de guidage (12), qui est de préférence réalisée comme bague de couverture, lors d'un mouvement d'ajustage axial pour ajuster le degré de mouture, ledit premier élément de moulage (13) étant déplaçable axialement au deuxième élément de moulage (14) au moyen d'une bague de déplacement (18), qui peut être tournée de manière manuelle et/ou de manière motrice, pour ajuster un degré de café moulu et une partie de logement (20), qui encercle le deuxième élément de moulage (14) et s'appuie axialement au premier élément de moulage (13), étant prévu pour le premier élément de moulage (13),
**caractérisé en ce que**
le disque de support (6) s'appuie, en particulier via un roulement mécanique (11), et la bague de guidage (12) s'appuie respectivement à la partie de boîtier monolithique (10) dans la direction axiale relative à l'axe de rotation (R), et que la partie de logement (20) est disposée au moins en parties dans la partie de boîtier monolithique (10) et que la partie de logement (20) est soumise à une force de ressort axiale dans la direction de la bague de déplacement (18), de préférence contre la bague d'ajustage (18), au moyen d'un ressort de positionnement (21) disposé axialement entre la partie de logement (20) et la bague de guidage (12).

2. Moulin à café selon la revendication 1,
**caractérisé en ce que**
le disque de support (6) s'appuie, de préférence via le roulement mécanique (11), à la partie de boîtier monolithique (10) dans la direction radiale et/ou la bague de guidage (12) s'appuie, de préférence directement ou via un joint élastomérique (15), à la partie de boîtier monolithique (10) dans la direction radiale.

3. Moulin à café selon la revendication 1 ou 2,
**caractérisé en ce que**
la partie de boîtier monolithique (10) s'étend dans la direction axiale jusqu'une zone à l'extérieur radiale du disque de support (6) et du premier élément de moulage (13).

4. Moulin à café selon l'une quelconque des revendications précédentes, **caractérisé en ce que**
la partie de logement (20) est disposée de manière non-rotative relativement à la partie de boîtier (10), en particulier à la partie de boîtier (10) via un support de torque.

5. Moulin à café selon l'une quelconque des revendications précédentes, **caractérisé en ce que**
la bague de guidage (12) est disposée de manière stationnaire relativement à la partie de boîtier (10).

6. Moulin à café selon l'une quelconque des revendications précédentes, **caractérisé en ce que**
la bague de déplacement (18) est positionnée, de préférence directement, à la partie de boîtier monolithique (10), en particulier dans une connexion de filetage (19).

7. Moulin à café selon l'une quelconque des revendications précédentes, **caractérisé en ce que**
la partie de logement (20) supporte un entonnoir de remplissage (22).

8. Moulin à café selon l'une quelconque des revendications précédentes, **caractérisé en ce que**
le ressort de positionnement (21) s'appuie directement à la partie de logement (20) et/ou à la bague de guidage (12).

9. Moulin à café selon l'une quelconque des revendications précédentes, **caractérisé en ce qu'**
un accouplement de surcharge, qui sert à desserrer une connexion non-rotative quand un broyeur (8) est bloqué, est disposé entre le disque de support (6) et le deuxième élément de moulage (14).

10. Moulin à café selon l'une quelconque des revendications précédentes, **caractérisé en ce que**
le broyeur (8) est réalisé comme module de broyeur (4) ayant un boîtier de broyeur (7), ledit module de broyeur (4) étant couplé de manière axiale et non-rotative à une unité d'entraînement, de préférence par enfichage, ladite unité d'entraînement comprenant un moteur d'entraînement électrique (2) et un engrenage réducteur (3).

11. Moulin à café selon l'une quelconque des revendications précédentes, **caractérisé en ce que**
le ressort de positionnement (21) est réalisé sous forme de bague.

12. Machine à café entièrement automatique, comprenant un moulin à café (1) selon l'une quelconque des revendications précédentes et une unité de broyage pour lessiver du café moulu produit à l'aide du moulin à café.
